# EUROPÄISCHE PATENTSCHRIFT

(11) **EP 1 575 366 B1**
(45) Veröffentlichungstag und Bekanntmachung des Hinweises auf die Patenterteilung: **28.02.2007**
(21) Anmeldenummer: 03782163.4
(22) Anmeldetag: 12.12.2003
(51) Int. Cl.: A22C 9/00, A22C 17/00, A23L 1/318

(54) **VORRICHTUNG UND VERFAHREN ZUM EINBRINGEN VON FLÜSSIGKEITEN IN FLEISCH**
DEVICE AND METHOD FOR INTRODUCING LIQUIDS INTO MEAT
DISPOSITIF ET PROCEDE POUR INTRODUIRE DES LIQUIDES DANS DE LA VIANDE

(30) Priorität: 17.12.2002 DE 10258905
(43) Veröffentlichungstag der Anmeldung: 21.09.2005
(73) Patentinhaber: Feina Gmbh, 98574 Schmalkalden/Thüringen (DE)
(72) Erfinder: VOIGT, Roland, 98574 Schmalkalden / Thüringen (DE); ERBE, Konrad, 98617 Rhönblick, OT Seeba / Thüringen (DE)
(86) Internationale Anmeldenummer: PCT/DE2003/004105
(87) Internationale Veröffentlichungsnummer: WO 2004/054373

(56) Entgegenhaltungen:
- EP-A- 1 240 827
- WO-A-00/32051
- US-A- 3 436 230
- US-A- 5 071 666
- US-A- 5 176 071
- US-A- 5 449 524
- US-A- 6 014 926

## Beschreibung

Die Erfindung betrifft eine Vorrichtung und ein Verfahren zum Einbringen von Flüssigkeiten in Fleisch welches knochen- und/oder knorpel- bzw. bindegewebshaltig ist, wie beispielsweise in Schlachttierkörper von Geflügel, aber auch in Keulen oder beispielsweise in Bauchfleisch um dieses zu behandeln, zu würzen und/oder zu konservieren.

Im Stand der Technik wird der DE 28 57 677 C 2 eine Vorrichtung zum Injizieren von Flüssigkeit in Fleischstücke beschrieben. Bei dieser Vorrichtung wird die Oberfläche der Fleischstücke mittels Injektionsnadeln durchstochen und dabei von einem Niederhalter zusammengepresst Die Resthöhe des Niederhalters bestimmt die jeweilige Injektionsmenge.

Auch diese Vorrichtung ist für den Einsatz bei knochenhaltigern Fleisch von Schlachttierkörpem denkbar ungeeignet. Einerseits werden die Fleischstücke durch die Injektionsnadeln stark verletzt. Andererseits kann es beim Einpressen der Nadeln in das knochenhaltige Fleisch zu Knochenabsplitterungen, Nadelbrüchen oder Verstopfungen der Nadeln kommen. Darüber hinaus ist diese Vorrichtung auch für knochenhaltiges Fleisch mit Hohlräumen wie beispielsweise Hähnchen denkbar ungeeignet, da entweder die zu injizierende Flüssigkeit mit hohen Lakeverlusten im Innenraum des Hähnchens versprüht wird, oder die Hähnchen während der Injektion so stark zusammengepresst und dabei plastisch zu einer "Hähnchenplatte" deformiert werden, dass diese anschließend nicht mehr verkaufsfähig sind.

Darüber hinaus kann mit dieser Vorrichtung die Injektionsmenge keinesfalls an die Kontur des Körpers wie beispielsweise bei Geflügel angepasst werden.

In der DE 3200 730 A1 wird ein Verfahren und eine Maschine zur Injektion von Würzflüssigkeiten in das Fleisch von Schlachttierkörpem, insbesondere Hähnchen vorgeschrieben, bei welcher die Tiere automatisch an den Beinen hängend entlang einem definierten Förderweg zu einer Einspritzstation gebracht werden, wobei durch einen mit der Förderung der Tiere gekoppelten Vorgang die Würzflüssigkeit in Abhängigkeit vom Gewicht der Tiere in drei unterschiedlichen Flüssigkeitsmengen mittels einer Injektionsnadel in das Fleisch der Tiere eingebracht wird.

Neben der in Abhängigkeit vom Hähnchengewicht nur in drei Stufen variierbaren Einspritzmenge besteht ein weiterer Nachteil dieser Lösung darin, daß eine homogene Verteilung der Injektionsflüssigkeit nicht möglich ist, da die Körpergestalt bei der Injektion unberücksichtigt bleibt. Die Injektionsnadel wird stets nur in den Brustbereich eingeführt. Es kann mit dieser Lösung weder in die Schenkel noch in den Rückenbereich injiziert werden.

Darüber hinaus kann beispielsweise beim Einstechen der Injektionsnadel in den Brustkorb des Hähnchens die Injektionsnadel in einen Knochen treffen.

Dies beeinflusst die Verteilung der Injektionsflüssigkeit negativ und kann darüber hinaus auch zum Absplittern von im Fleisch verbleibenden Knochenstücken führen.

Infolge der bei den beiden vorgenannten Bauformen prozessbedingt eingesetzten Injektionsnadeln kann es darüber hinaus bei Verwendung von Zucker, Eiweißen und/oder Gewürzen in der Würzflüssigkeit beispielsweise zu Verstopfung der lakeführenden Baugruppen kommen, wodurch der Bearbeitungsprozeß stark beeinträchtigt wird.

Darüber hinaus sind der Viskosität der zu verarbeitenden Würzflüssigkeit, insbesondere durch die prozessbedingten Leitungslängen, zwangsläufig enge Grenzen gesetzt, da mit zunehmendem Leitungsinnendruck bei hoher Viskosität der Würzflüssigkeit unter anderem die Wandreibung so stark ansteigt, daß unter Umständen die Fließgeschwindigkeit bis auf Null zurück geht.

Dabei ist es mit diesen im Stand der Technik vorbeschriebenen Nadelinjektoren nicht möglich Würzflüssigkeiten bzw. Laken in die Fleischstücke gleichmäßig verteilt einzubringen, so daß es im Fleischstück zunächst stets zur Anlage von Depots kommt, in denen die Lake angereichert ist.

Diese im Fleisch zunächst nur deponierte Pökellake muß dann nachfolgend über einen sehr langen Zeitraum mittels Massier oder Poltermaschinen und/oder Ruhephasen in den behandelten Fleischstücken verteilt werden. Zudem bewirken die Nadeln nicht nur Verletzungen am jeweiligen Tierkörper sondern können infolge des sich wiederholenden Einstechens in das jeweils nachfolgende Tier auch zu Kontaminationen führen.

Gleichfalls zeigt die Praxis, daß die zu gewährleistende Volumentoleranz der mit Nadeln injizierten Flüssigkeitsmenge am Einzelstück nicht unter 5 % vom Rohgewicht sichergestellt werden kann, da der durch Nadeln im Fleischstück verursachte Kanal bewirkt, dass bereits injizierte Lake undefiniert wieder austreten kann.

Im Stand der Technik wird darüber hinaus in der WO 00/32051 A eine Vorrichtung zum Aufbringen von Behandlungsflüssigkeit vorbeschrieben, bei der beispielsweise Würzflüssigkeit einerseits mit Hilfe von Hochdruckapplikation auf die Oberfläche der Schlachttierkörper aufgesprüht, oder andererseits mit in ihrer Eindringtiefe einstellbaren Injektionsnadeln, an die Anatomie des Schlachttierkörpers angepasst, injiziert wird.

Zudem sind im Stand der Technik aber auch Vorrichtungen zur nadellosen Injektion von Flüssigkeiten in das Fleisch von Schlachttierkörpern bekannt.

So beschreibt die US 3 436 230 eine Vorrichtung zum Einbringen von Flüssigkeiten in konfektionierte Fleischstücke, bei der eine starre Düsenleiste durch Heben und Senken auf ein zu behandelndes Fleischstück zur nadellosen Injektion aufgepresst wird.

Auch die US 5 176 071 A beschreibt ein nadelloses Injektionsverfahren zum Einbringen von Flüssigkeiten in konfektioniertes Fleisch von Schlachttierkörpern, wobei die Injektion an einer speziellen kontinuierlichen Transportvorrichtung durch eine nadellose Hochdruckinjektion mittels einer feststehenden Düsenleiste erfolgt. Eine oberhalb der Düsenleiste angeordnete, in eine spezielle Transportvorrichtung integrierte Anpresswalze bewirkt dabei den für die Injektion zwingend erforderlichen direkten Kontakt der Düsen mit dem Fleisch und presst gleichzeitig das vorkonfektionierte Fleisch auf eine nahezu gleichmäßige Dicke, so dass trotz der vorrichtungsgemäß vorgegebenen (nicht kontinuierlich variierbaren) Injektionsmenge eine zumindest annähernd gleichmäßige Verteilung der Lakenkonzentration erreicht werden kann.

Infolge der während der Injektion kontinuierlich laufenden, die Anpreßkraft an die Düsenleiste gewährleistenden Transportvorrichtung werden in die Fleischstücke kleine längliche Schnitte eingebracht die zu einer kontinuierlichen Verletzung des behandelten Fleisches führen.

Neben diesem Nachteil kann das kontinuierliche Pressen des Fleisches mittels der Anpresswalze zudem eine Kontamination der gesamten Charge bewirken. Mit der in der US 5 176 071 A vorgeschlagen technischen Lösung können jedoch nur knochenfreie, konfektionierte Fleischstücke behandelt werden, da knochenhaltige Fleischstücke entweder durch die Anpresswalze nicht vollständig auf die Düsenleiste aufgepresst oder wie beispielsweise bei Geflügel von der Anpresswalze derart zerquetscht werden können, daß diese nach der Behandlung nicht mehr verkaufsfähig sind.

Auch die in der US 6 014 926 A vorgestellte Lösung beschreibt ein Verfahren und eine Vorrichtung zur nadellosen Hochdruckinjektion wobei in Verbindung mit einer speziellen Transportvorrichtung die Düsen während der Injektion mittels eines schwenkbaren Roboterarmes von oben auf die vorkonfektionierten Fleischblöcke die als Gegenlager wirkende Transportvorrichtung aufgepresst werden.

Ein Nachteil dieser Lösung besteht wiederum darin, daß auch mit dieser Lösung die Anatomie von knochen-, knorpel- und/oder beispielsweise stark bindegewebshaltigen Fleischstücken von Schlachttierkörpern nicht berücksichtigt werden kann. Alle mit der vorgenannten Lösung zu verarbeitenden Fleischstücke müssen stets vorbearbeitet und konfektioniert werden.

Die Verarbeitung von beispielsweise knochen-, knorpel- und stark bindegewebshaltige Fleischstücke ist mit der in der US 6 014 926 A vorgestellten Lösung keinesfalls möglich, da diese Lösung unter derartigen Randbedingungen eine ungleichmäßige, undefinierte Verteilung der zu injizierenden Flüssigkeit in den fleischigen Teilen der Fleischstücke bewirkt. Darüber hinaus ist auch die Verarbeitung von Schlachttierkörpern mit der vorgenannten Lösung nicht möglich, da weder das Schlachtgewicht ermittelt noch die Einspritzmenge in Abhängigkeit vom Schlachtgewicht variiert werden kann.

Zudem wurde die durch den Roboterarm aufzupressende Düsenplatte bei nicht vorkonfektioniertem Fleisch entweder unvollständig aufgepresst, oder wie beispielsweise bei Geflügel von der aufgepressten Düsenplatte derart zerquetscht werden, daß dieses nach der Behandlung nicht mehr verkaufsfähig ist, wobei die durch die Düsenplatte zwangsläufig vorgegebenen Injektionsverhältnisse unter derartigen Randbedingungen entweder eine inhomogene Verteilung der Injektionsflüssigkeit bewirken oder den Rücklauf stark kontaminieren.

In der DE-OS 198 25 233 C2 wurde zudem ein weiteres Verfahren in Verbindung mit einer zugehörigen Vorrichtung vorgestellt, bei der die zu injizierende Flüssigkeit mit einer oder mehrerer Düsen als Vollstrahl mit einem Durchmesser von 0,2 mm bis 1,0 mm bei einer Strahlstoßkraft von 0,5 N bis 18 N über einen Zeitraum von 0,1 Sekunden bis 0,8 Sekunden einmalig, oder wiederholt an einer, oder an mehreren punktförmigen Stellen an der Oberfläche in das Fleisch von Schlachttierkörpern injiziert werden kann, wobei vor und/oder zwischen und/oder nach dem Injizieren ein Massieren oder Poltern der behandelten Fleischstücke erfolgt

Der gemäß der DE-OS 198 25 233 injizierte Flüssigkeitsvollstrahl dringt dabei so in das Fleisch ein, daß infolge seiner Strahlstoßkraft eine. Verteilung an der Gewebestruktur und dadurch eine großvolumige Ausbreitung in Form einer Ausbreitungswolke stattfindet. Aufgrund einer vorrichtungsbedingten kontinuierlichen Veränderung der Lage des Fleisches zur Düse wird zudem eine mehrdimensionale Injektion an den unterschiedlichsten Stellen der Fleischstücke durchgeführt, die zu einer hochgradigen Durchtränkung des Fleisches führt, so daß selbst größere Lakemengen jeweils in Teilmengen mit einer oder mit mehreren der In der DE-OS 198 25 233 beschriebenen Düsen injiziert werden können.

Diese Lösung ist beispielsweise hervorragend in Verbindung mit der Herstellung von Kochschinken geeignet.

Ein Nachteil dieser in der DE-OS 198 25 233 C2 beschriebenen Lösung besteht jedoch darin, daß im zu bearbeitenden Fleischstück, nach den Regeln der statistischen Verteilung, eine bereichsweise Anhäufung von Lake erfolgen kann.

Dabei werden mittels der in der DE-OS 198 25 233 C2 vorbeschriebenen Vorrichtung die zu behandelten Fleischstücke wahlweise auch vor, aber immer nach der erfindungsgemäßen Injektion so lange massiert oder gepoltert, bis die auf die Fleischmenge vorausberechnete Flüssigkeitsmenge statistisch verteilt im Fleisch enthalten ist.

Auf die Anatomie des Schlachttierkörpers, beispielsweise eines Hähnchens, kann mit dieser Lösung keine Rücksicht genommen werden.

Auch findet bei der Verarbeitung von beispielsweise Hähnchen mit der vorgenannten Lösung, infolge des deutlich geringeren spezifischen Gewichtes während der Injektion eine Relativbewegung zwischen Tier und Düse statt welche eine starke Verletzung der Fleischoberfläche zur Folge hat.

Der Maschinenaufbau erlaubt dabei auch nur einen diskontinuierlichen Prozess und kein kontinuierliches Injizieren beispielsweise an einem Transportband.

Der Erfindung liegt daher die Aufgabe zugrunde, eine Vorrichtung und ein Verfahren zum Einbringen von Flüssigkeiten in Fleisch zu entwickeln welches die vorgenannten Nachteile des Standes der Technik beseitigt und selbst in knochen- und/oder knorpel- bzw. bindegewebshaltiges Fleisch, wie beispielsweise in Schlachttierkörper von Geflügel, aber auch in Keulen oder in Bauchfleisch hocheffektiv bei robustem Aufbau mit hoher Zuverlässigkeit in kürzester Zeit nahezu an jeder, selbst einer bereits vorhandenen Transporteinrichtung, sogar an einem Schlachtband, nadellos ein an die Anatomie des Schlachttierkörpers angepasstes, sogar gleichzeitiges Einbringen von Wasser, Laken, Stabilisatoren, Würzflüssigkeiten und/oder sonstigen Flüssigkeiten in exakt definierten, selbst sehr geringen Mengen bei minimierter Injektionsmengentoleranz ermöglicht.

Erfindungsgemäß wird diese Aufgabe durch ein Verfahren zum Einbringen von Flüssigkeiten in Fleisch, nach Anspruch 9, in Verbindung mit einer efindungsgemäßen, an einem Grundgestell angeordneten Vorrichtung zum Einbringen von Flüssigkeiten in Fleisch, nach Anspruch 1, gelöst.

Diese Vorrichtung kann mit einer von der erfindungsgemäßen Vorrichtung unabhängigen, bereits vorhandenen Fördereinrichtung (2) für knochen- und/oder knorpel- bzw. bindegewebshaltiges Fleisch von Schlachttierkörpern (12) zusammenwirken.

Am Grundgestell (1) der Vorrichtung ist/sind ein oder mehrere starr oder linear verschiebbar angeordnete/s Maschinengestell/e (3) befestigt, an dem/denen eine Injektionsvorrichtung (6) zur nadellosen Injektion angeordnet ist.

Erfindungswesentlich ist dabei, daß die Injektionsvorrichtung (6) aus mehreren am Maschinengestell (3) angeordneten, an die Anatomie des Fleischteiles angepassten, bis zu einer Endlagenbegrenzung (9) zuführbaren Düsenstöcken (7) besteht an denen eine oder mehrerer Spritzdüsen (8) angeordnet sind, und die das zu injizierende Fleischstück während der Injektion zangenartig umklammern.

Voraussetzung für den Einsatz der einfachsten Ausführungsform der erfindungsgemäßen Lösung mit starr am Grundgestell (1) angeordnetem/n Maschinengestell/en ist, daß die Fördereinrichtung (2) getaktet ist, d.h. während des Injektionsvorganges anhält.

Vorteilhaft ist aber auch, daß das/die Maschinengestell/e (3) am Grundgestell (1) verfahrbar angeordnet ist/sind.

Durch den Einsatz von einem oder mehreren verfahrbaren Maschinengestell/en (3) ist es möglich deren Antrieb dem Stand der Technik gemäß so ansteuern, daß diese/er zeitweise synchron mit der Fördereinrichtung (2) verfahren/verfährt. Somit kann zwischen dem Transportband und der im Einsatz befindlichen Injektionsvorrichtung (6) während der Injektion stets die erfindungswesentliche Relativgeschwindigkeit "0" gewährleistet werden. Durch den Einsatz mehrerer solcher synchron mit der Fördereinrichtung (2) verfahrbarer Maschinengestelle (3) kann die erfindungsgemäße Vorrichtung an jede beliebige Geschwindigkeit der Fördereinrichtung (2) angepasst werden.

Vorteilhaft ist auch, daß die Düsenstöcke (7) mit den an diesen angeordneten, speziell ausgerichteten Spritzdüsen (8) an die jeweilige Anatomie wie beispielsweise Fleischkeulen, Geflügel u. a. m. exakt angepasst sind, und so ein definiertes "Halten" bewirken.

Die erfindungsgemäße Vorrichtung ermöglicht durch den erfindungsgemäß möglichen Einsatz von mehreren Flüssigkeitsverteilersystemen (5) zudem, daß gleichzeitig sowohl niedrigviskose wie auch hochviskose Laken definiert in das zu bearbeitende knochenhaltige Fleisch eingebracht werden können.

Infolge der erfindungsgemäßen, dreidimensionalen Anordnung der Spritzdüsen (8) kann jeder Punkt der Oberfläche des Schlachttierkörpers zudem selbst mit unterschiedlichen Injektionsflüssigkeiten definiert angesteuert werden, so daß beispielsweise bei einem Hähnchen im Bereich der Schenkel eine salzärmere Lake tiefer und im Bereich des Rückens eine salzhaltigere Lake nicht so tief injiziert wird, wobei mittels der erfindungsgemäßen Vorrichtung neben unterschiedlich konzentrierten Salzlaken auch gleichzeitig sonstige Würzflüssigkeiten wie Ketchup oder Mayonnaise in das Fleisch der knochenhaltigen Schlachttierkörper mit einer Volumentoleranz der insgesamt injizierten Flüssigkeitsmenge am Einzelstück von ca. 2 % des Rohgewichtes eingebracht werden können.

Wesentlich ist, daß die Fördervorrichtung ein Transportband oder ein Schlachtband ist. Die Anordnung der erfindungsgemäßen Vorrichtung an einem Schlachtband, hat gegenüber der Anordnung an einem Transportband den Vorteil, daß die Behandlung einerseits zu einem frühest möglichen Zeitpunkt post mortem stattfinden kann und andererseits keine zusätzliche Logistik im technologischen Ablauf erforderlich ist, so daß die ursprüngliche Prozessgeschwindigkeit sofort für die weitere Bearbeitung und Konservierung des schlachtfrischen, knochenhaltigen Fleisches genutzt werden kann, wobei gegenüber der Anordnung der erfindungsgemäßen Vorrichtung an einem Transportband eine wesentliche Arbeitszeiteinsparung erzielt wird.

An einem Transportband hingegen müssen die zu bearbeitenden knochenhaltigen Fleischstücke erst in einem separaten Arbeitsgang positioniert werden.

Kennzeichnend ist stets, daß die Injektionsvonichtung (6) mit Endlagenbegrenzungen (9) versehen ist, so daß ein Zerquetschen beispielsweise des Geflügelkörpers vermieden wird.

Ein weiteres wesentliches Merkmal ist, daß an einem Düsenstock (7) gleichartige und/oder unterschiedliche Spritzdüsen (8) angeordnet sind. Dadurch kann einerseits die Injektionstiefe, aber auch die Injektionsmenge bei beispielsweise gleichbleibender Injektionszeit variiert, und/oder auf unterschiedliche Viskositäten der Injektionsflüssigkeit angepaßt werden. Erfindungsgemäß ist weiterhin, daß mehrere Injektionsvorrichtungen (4) an einem verfahrbaren Maschinengestell (3) miteinander starr verbunden sind. Dadurch kann bei gleichbleibender Anzahl von verfahrbaren Maschinengestellen (3) beispielsweise die Geschwindigkeit der Fördereinrichtung erhöht und so der Durchsatz der Gesamtanlage gesteigert werden.

Kennzeichnend ist darüber hinaus, daß an einem Grundgestell (1) mehrere verfahrbare Maschinengestelle (3) mit Injektionsvorrichtungen (4) angeordnet sind. Diese erfindungsgemäße Lösung ermöglicht insbesondere eine Erhöhung der Zuverlässigkeit der Gesamtanlage bei gleichzeitiger Optimierung der Fertigungskosten, da die in der Rückholbewegung der Maschinengestelle (3) zu beschleunigenden Massen insbesondere bei hohem Geschwindigkeiten der Fördereinrichtung (2) optimiert werden können.

Erfindungswesentlich ist aber auch, daß jede Injektionsvorrichtung (6) mit einer oder mehreren verfahrbar angeordneten Spritzlanzen (10) versehen sein kann, die im Bedarfsfall z.B. bei der Geflügelbearbeitung angeordnet wird/werden können und in den Bauchraum des Tieres einfahrt/einfahren. Diese spezielle/n Spritzlanze/n (10) dient/dienen der Desinfizierung und/oder dem Würzen des Bauchraumes des jeweiligen Tieres.

Die Fleischstücke werden vertikal hängend, vertikal aufgesteckt, horizontal aufgesteckt oder in eine Matrize eingelegt in der Fördereinrichtung (2) transportiert, so dass stets eine exakte Lagefixierung gegenüber der/den Injektionsvorrichtungen (6) gewährleistet ist.

Das erfindungsgemäße Verfahren zeichnet sich dadurch aus, daß jeder der Düsenstöcke (7) separat auch mit gleichartigen oder unterschiedlichen Flüssigkeiten, über gleiche oder unterschiedliche, exakt definierte Zeiträume mit gleichem oder unterschiedlichem, exakt definiertem Druck beaufschlagt werden kann. Dadurch wird es möglich, daß selbst unterschiedliche, beispielsweise auf Basis der Wirkstoffmenge für das Knochenhaltige Fleischstück vorausberechnete Injektionsflüssigkeiten in unterschiedlichen Injektionsmengen, infolge der Steuerung von Injektionszeit und Injektionsdruck mittels der erfindungsgemäßen Vorrichtung, exakt, reproduzierbar, zuverlässig und optimal injiziert werden.

Das erfindungsgemäße Verfahren zeichnet sich aber auch dadurch aus, daß im Bedarfsfall auch die Spritzlanze/en (6) separat mit Flüssigkeit/en über gleiche oder unterschiedliche, exakt definierte Zeiträume mit gleichem oder unterschiedlichem, exakt definiertem Druck beaufschlagt wird/werden, so daß bei der Geflügelbearbeitung im Bauchraum des Tieres gleichartige/unterschiedliche Flüssigkeiten (selbst in unterschiedlichen - Mengen) exakt. reproduzierbar, optimal versprüht werden können, um so den Bauchraum des Tieres definiert zu Desinfizieren und/oder zu Würzen.

Wesentlich ist auch, daß bestimmte, wiederkehrende Lebensmittelgeometrien wie beispielsweise Fleischkeulen, Geflügel u.a.m. mittels der exakt auf die jeweilige Anatomie angepassten Düsenstöcke (7) mit den an diesen angeordneten, speziell ausgerichteten Spritzdüsen (8) aufgrund einer exakt auf die zu injizierende Flüssigkeit und die zu erzielende Eindringtiefe abgestimmten Strahlstoßkraft, und einer in diesem Zusammenhang unter Beachtung der Düsengröße auf die Eindringmenge abgestimmten Injektionszeit zielgerichtet hocheffektiv bearbeitet werden können, so daß ein an die Anatomie des jeweiligen knochenhaltigen Fleischstückes angepaßtes Desinfizieren und/oder Würzen bei hoher und vor allem gleichmäßiger Produktqualität mit minimaler Injektionsmengentoleranz gewährleistet werden kann.

Durch die erfindungsgemäß mögliche gleichzeitige Ansteuerung mehrerer Düsenstöcke mit unterschiedlichem Betriebsdruck und unterschiedlichen Injektionsflüssigkeiten kann in Verbindung mit dem erfindungsgemäß möglichen Einsatz von unterschiedlichen Spritzdüsen an einem Düsenstock eine auf den jeweils zu bearbeitenden Schlachttierkörper abgestimmte schonende Bearbeitung unter optimaler Nutzung der jeweiligen Gewebe- und Knochenstruktur gewährleistet werden.

Diese erfindungsgemäße zuverlässige, hocheffektive exakt reproduzierbare Injektion des knochenhaltigen Fleisches ist die Grundlage für eine hohe und gleichmäßige Produktqualität, wobei sogar der beispielsweise bei der Kühlung von Frischfleisch eintretende Flüssigkeitsverlust definiert ausgeglichen werden kann.

Kennzeichnend ist auch, daß in Abhängigkeit von der jeweiligen Geschwindigkeit der Fördereinrichtung mehrere verfahrbare Maschinengestelle (3) mit injektionsvorrichtungen (6) zeitlich versetzt zum Einsatz kommen. Vorteilhaft ist, wenn die Fleischstücke vor der nadellosen Injektion gewogen werden, um stets eine auf das Rohgewicht bezogene exakte lnjektionsmenge zu gewährleisten.

Kennzeichnend ist jedoch stets, daß die Maschinengestelle (3) mit den in der Injektionsphase befindlichen Injektionsvorrichtungen (6) gegenüber dem Transportband (2) die Relativgeschwindigkeit "0" aufweisen. Dadurch werden Verletzungen des knochenhaltigen Schlachttierkörpers vermieden.

Erfindungswesentlich ist auch, daß die Viskosität der zu verarbeitenden Flüssigkeit zwischen 1mPas und 10 000 mPas beträgt. Mittels des erfindungsgemäßen Verfahrens können so beispielsweise auch in Flüssigkeiten untergemischte Mineralien, saure, basische, aromatische Stoffe, Kohlehydrate, Fette, Eiweiße und Zusatzstoffe wie Gewürze, sowie Gemische aus den vorstehenden Stoffen injiziert werden, wodurch der chemische und mechanische Zustand des Lebensmittels derart beeinflußt wird, daß dieses gegen bakteriologischen Befall und/oder bakteriologisches Wachstum stabilisiert wird.

Darüber hinaus kann die Injektion der hochviskosen Flüssigkeiten auch dem Hatten und dem Erreichen von Aromen, dem Halten von Gewebeflüssigkeiten, und/oder dem Halten von Fremdflüssigkeiten und anderem mehr dienen, und so einer Stabilisierung der Flüssigkeit in der von Produzenten gewünschten Zustandsform des Endproduktes realisieren.

Auch können beispielsweise in einzufrierende Hähnchen lebensmittelechte Zusatzstoffe injiziert werden, die das Kristallwachstum von Wasser einschränken und so einer daraus resultierenden Zerstörung der Muskelfasern entgegenwirken.

Die erfindungsgemäße Vorrichtung ermöglicht dabei, daß sowohl niedrigviskose wie auch hochviskose Laken zeitgleich nadellos, hocheffektiv und zuverlässig an den unterschiedlichen Stellen der Oberfläche definiert in das zu bearbeitende knochenhaltige Fleisch eingebracht werden können.

In Verbindung mit der ebenfalls erfindungsgemäßen, nahezu allseitigen Anordnung der Spritzdüsen (8) im Bezug auf das zu bearbeitende knochenhaltige Fleischstück wird erreicht, daß die mit der Fördereinrichtung (2) transportierten knochenhaltigen Fleischstücke optimal, beispielsweise in Form von Wolken (die einander überlappen können) gleichmäßig über das gesamte Volumen durchtränkt werden.

Ein weiteres Merkmal der Erfindung besteht darin, daß die Temperatur der zu verarbeitenden Flüssigkeit zwischen -5° C und 150° C liegt, so daß mittels der erfindungsgemäßen Lösung einerseits selbst hohen hygienischen Anforderungen im niedrigen Temperaturbereich entsprochen werden kann. Andererseits können mittels der erfindungsgemäße Lösung selbst Fette im flüssigen Zustand injiziert werden.

Weitere Merkmale, Einzelheiten und Vorteile der Erfindung ergeben sich darüber hinaus, neben dem Wortlaut der Ansprüche auch, in Verbindung mit den zugehörigen Zeichnungen, aus den nachfolgenden Erläuterungen zu den Ausführungsbeispielen.

Nachfolgend soll nun die Erfindung an Hand mehrerer Ausführungsbeispiele in Verbindung mit sechs Figuren näher erläutert werden.

Dabei zeigen:
- Figur 1:: die Vorderansicht einer möglichen Bauform der erfindungsgemäßen Vorrichtung unmittelbar an einem Schlachtband bei geöffneter Injektionsvorrichtung:
- Figur 2 :: die Vorderansicht auf die erfindungsgemäße Vorrichtung gemäß der Figur 1 bei geschlossener Injektionsvorrichtung;
- Figur 3 :: die Draufsicht auf die erfindungsgemäße Vorrichtung gemäß der Figur 2 bei geschlossener Injektionsvorrichtung;
- Figur 4 :: die erfindungsgemäße Vorrichtung gemäß der Figur 1 in der Seitenansicht;
- Figur 5 :: die Vorderansicht einer weiteren möglichen Bauform der erfindungsgemäßen Vorrichtung mit horizontal auf eine Aufnahme aufgestecktem knochen-, knorpel- und bindegewebshaltigem Schlachttierkörper bei geöffneter Injektionsvorrichtung;
- Figur 6 :: die Vorderansicht einer weiteren möglichen Bauform der erfindungsgemäßen Vorrichtung mit vertikal auf eine Aufnahme aufgestecktem knochen-, knorpel- und bindegewebshaltigem Schlachttierkörper bei geöffneter Injektionsvorrichtung.

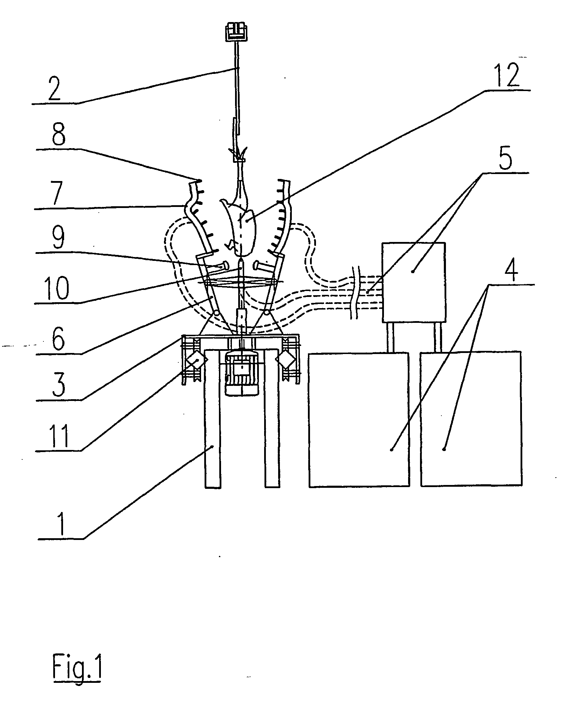

Die Figur 1 zeigt die Vorderansicht einer möglichen Bauform der erfindungsgemäßen Vorrichtung an einem Schlachtband mit geöffneter Injektionsvorrichtung 8.

An einer Fördereinrichtung 2, im vorliegenden Fall einem Schlachtband, ist das knochenhaltige Fleisch von Schlachttierkörpern 12, beispielsweise Geflügel, angeordnet.

Unterhalb des Schlachtbandes befindet sich das Grundgestell 1 der erfindungsgemäßen Vorrichtung.

An diesem sind zwei auf Linearführungen 11 verfahrbare Maschinengestelle 3 wie "Schlitten" angeordnet.

An jedem der verfahrbaren Maschinengestelle 3 sind wiederum jeweils zwei mit mehreren Hochdruckanlagen 4 über mehrere Flüssigkeitsverteilersysteme 5 verbundene Injektionsvorrichtungen 6 zur nadellosen Injektion ortsfest befestigt.

Jede der Injektionsvorrichtungen 6 besteht aus sieben am Maschinengestell 3 schwenkbar angeordneten Düsenstöcken 7 an denen jeweils mehrere Spritzdüsen 8 angeordnet sind.

Die Düsenstöcke 7 mit an diesen angeordneten, speziell ausgerichteten Spritzdüsen 8 sind an die Anatomie der zu bearbeitenden Geflügelschlachttierkörpern exakt angepasst.

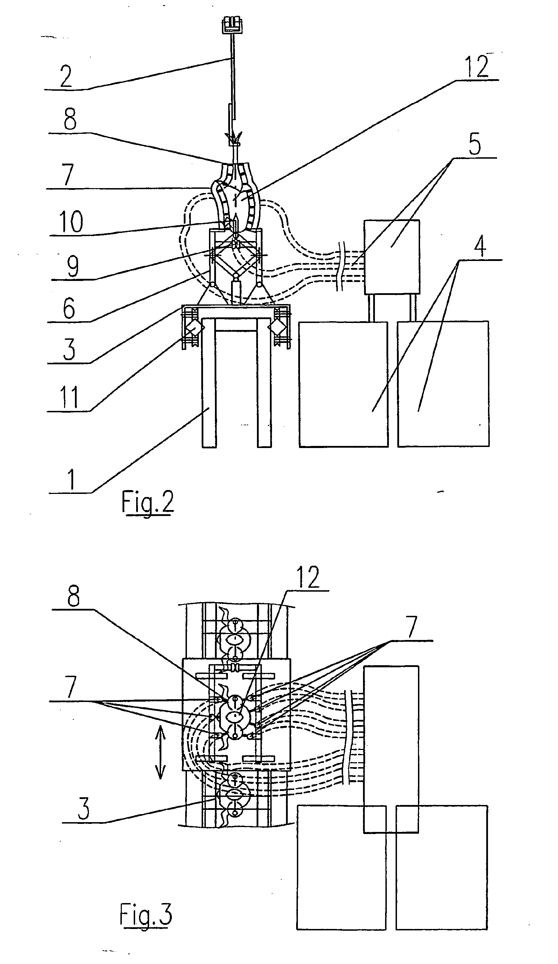

Diese schwenkbar am Maschinengestell angeordneten, an die Anatomie des verarbeitenden Schlachttierkörpers angepaßten Düsenstöcke 7 sind über ein Getriebe derart miteinander verbunden, daß die aus Düsenstöcken 7 mit Getriebe bestehende Injektionsvorrichtung 6, wie in der Figur 1 dargestellt, vor bzw. nach der Injektion öffnet und den Schlachttierkörper 12 nicht berührt, Während der Injektion, wie in den Figuren 2 und 3 dargestellt, umklammern die Düsenstöcke 7 der Injektionsvorrichtung 8 den Schlachttierkörper 12 zangenartig.

Dabei ist die Injektionsvorrichtung 6 mit Endlagenbegrenzungen 9 versehen um ein Zerquetschen der Geflügelkörper zu vermeiden.

Die Figur 2 zeigt nun die Vorderansicht auf die erfindungsgemaße Vorrichtung gemäß der Figur 1 jedoch mit geschlossener Injektionsvorrichtung 8 und an den Schlachttierkörper 12 angepreßten Spritzdüsen 8. Jede Injektionsvorrichtung 6 ist im vorliegenden Ausführungsbeispiele mit einer vertikal verfahrbar angeordneten Spritzlanze 10 versehen. Diese Spritzlanze (10) dient der Desinfizierung und/oder dem Würzen des Bauchraumes des Schlachttierkörpers 12 und fährt während des Anpressens der Spritzdüsen 8 in den Bauchraum des Schlachttierkörpers 12 ein.

Die in diesem Ausführungsbeispiel am Grundgestell auf Linearführungen 11 wie "Schlitten" verfahrbar angeordneten Maschinengestelle 3 werden über ihren Antrieb derart verfahren, daß während der Injektion ein zeitweiser Synchronlauf des im Spritzzyklus befindlichen Maschinengestelles 3 mit der Fürdereinrichiung 2 gewährleistet ist, so daß die während der Injektionsphase erforderliche Relativgeschwindigkeit "0" bewirkt wird.

Nach der Injektion geben die zangenartig den Schlachttierkörper 12 umklammernden Düsenstöcke 7 den Schlachttierkörper 12 frei und das Maschinengestell 3 verfährt entgegen der Förderrichtung des Schlachtbandes zur erneuten Positionierung für den nächsten Injektionsvorgang.

Die Anordnung der erfindungsgemäßen Vorrichtung an einem Schlachtband hat dabei gegenüber der Anordnung an einem Transportband den Vorteil, daß die Behandlung einerseits zu einem frühest möglichen Zeitpunkt post mortem stattfinden kann und andererseits keine zusätzliche Logistik im technologischen Ablauf erforderlich ist, so daß die ursprüngliche Prozessgeschwindigkeit sofort für die weitere Bearbeitung und Konservierung des schlachtfrischen, knochenhaltigen Fleisches genutzt werden kann.

In der Figur 3 ist die Draufsicht auf die erfindungsgemäße Vorrichtung gemäß Figur 2 mit sieben am Maschinengestell 3 angeordneten Düsenstöcken 7 dargestellt. An jedem dieser Düsenstöcke 7 können dabei sowohl gleichartige wie auch unterschiedliche Spritzdüsen 8 angeordnet sein.

Dadurch kann einerseits die Injektionstiefe, aber auch die Injektionsmenge bei beispielsweise gleichbleibender Injektionszeit variiert, und/oder auf unterschiedliche Viskositäten der Injektionsflüssigkeiten angepaßt werden.

Durch den gleichzeitigen Einsatz von mehreren Flüssigkeitsverteilersystemen 5 ermöglicht die erfindungsgemäße Vorrichtung, daß sowohl niedrigviskose wie auch hochviskose Laken zeitgleich in das zu bearbeitende knochenhaltige Fleisch definiert eingebracht werden können.

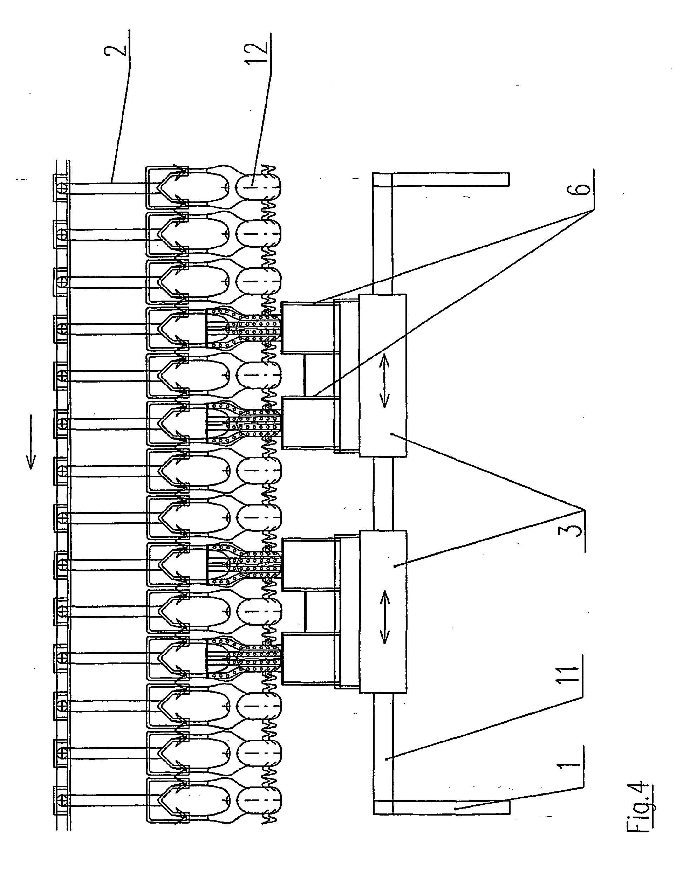

Infolge der räumlichen Anordnung der Spritzdüsen 8 kann somit jeder ausgewählte Punkt der Oberfläche des Schlachttierkörpers 12 selbst mit unterschiedlichen Injektionsflüssigkeiten definiert angesteuert werden, so daß eine Volumentoleranz der injizierten Flüssigkeitsmenge am Einzelstück von ca. 2 % des Rohgewichtes gewährleistet werden kann. In der Figur 4 ist die erfindungsgemäße Vorrichtung gemäß der Figur 1 in der Seitenansicht dargestellt.

Am Schlachtband, einer möglichen Ausführungsform der Fördereinrichtung 2, ist das Grundgestell 1 der erfindungsgemäßen Vorrichtung angeordnet, an dem zwei Maschinengestelle 3 auf Linearführungen 11 verfahrbar angeordnet sind. An jedem der beiden verfahrbaren Maschinengestelle 3 sind wiederum jeweils zwei mit mehreren Hochdruckanlagen über mehrere Flüssigkeitsverteilersysteme verbundene Injektionsvorrichtungen 6 zur nadellosen Injektion angeordnet.

Durch den Einsatz mehrerer, zeitweise gleichzeitig mit der Fördereinrichtung 2 synchron verfahrbarer Maschinengestelle 3 mit vorzugsweise mehreren Injektionsvorrichtungen 6 kann die erfindungsgemäße Vorrichtung auch an höhere Geschwindigkeiten des Schlachtbandes, der Fördereinrichtung 2, angepasst werden, so daß zwischen dem Schlachtband und der in Einsatz befindlichen Injektionsvorrichtung 6 während der Injektion stets die Relativgeschwindigkeit "0" gewährleistet ist.

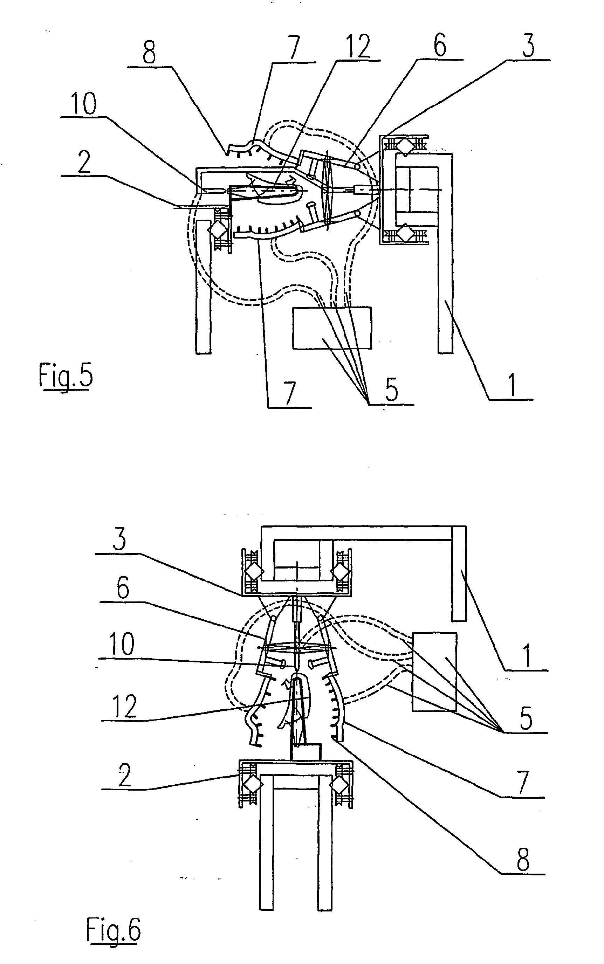

Die Figur 5 zeigt nun die Vorderansicht einer weiteren möglichen Bauform der erfindungsgemäßen Vorrichtung mit horizontal auf eine Aufnahme einer Fördereinrichtung 2 aufgestecktem knochen-, knorpel- und bindegewebshaltigem Schlachttierkörper bei geöffneter Injektionsvorrichtung.

An der Fördereinrichtung 2 ist wiederum das Grundgestell 1 der erfindungsgemäßen Vorrichtung mit mehreren verfahrbaren (wie bereits in Verbindung mit den Figuren 1 bis 4 beschrieben) Maschinengestellen 3 angeordnet. An diesen verfahrbaren Maschinengestellen 3 sind auch in diesem Ausführungsbeispiel eine Spritzlanze 10 und die erfindungsgemäßen Injektionsvorrichtungen 6 mit den Zuleitungen von den Flüssigkeitsverteilersysteme 5 zur nadelloser Injektion angeordnet.

Im vorliegenden Ausführungsbeispiel besteht jede Injektionsvorrichtung 6 wiederum aus mehreren schwenkbaren, jedoch horizontal am Maschinengestell 3 angeordneten, mit Spritzdüsen 8 versehenen Düsenstöcken 7.

Durch die Anordnung der Schlachttierkörper 12 horizontal auf der Aufnahme einer Fördereinrichtung 2 ist eine exakte Lagefixierung der zu bearbeitenden Schlachttierkörper 12 gegenüber den Injektionsvorrichtungen 6 gewährleistet. Auch diese erfindungsgemäße Vorrichtung ermöglicht durch den Einsatz von mehreren Flüssigkeitsverteilersystemen 5 wiederum, daß gleichzeitig sowohl niedrigviskose wie auch hochviskose Laken definiert in das zu bearbeitende knochenhaltige Fleisch eingebracht werden können.

In der Figur 6 ist die Vorderansicht einer weiteren möglichen Bauform der erfindungsgemäßen Vorrichtung mit vertikal auf einer Aufnahme einer Fördereinrichtung 2 aufgestecktem knochen-, knorpel- und bindegewebshaltigem Schlachttierkörper 12 bei geöffneter Injektionsvorrichtung 6 dargestellt.

An der Fördereinrichtung 2 ist wiederum das Grundgestell 1 der erfindungsgemäßen Vorrichtung mit mehreren verfahrbaren (wie in Verbindung mit den Figuren 1 bis 4 beschrieben) Maschinengestellen 3 angeordnet.

An den verfahrbaren Maschinengestellen sind in diesem Ausführungsbeispiel die Injektionsvorrichtungen 6 zur nadellosen Injektion vertikal "hängend" angeordnet. Jede der Injektionsvorrichtung 6 besteht aus mehreren vertikal am Maschinengestell 3 schwenkbar angeordneten Düsenstöcken 7 an denen wiederum mehrere Spritzdüsen 8 angeordnet sind. An der Injektionsvorrichtung ist auch bei dieser Ausführungsform wiederum eine Spritzlanze 10 angeordnet .

Durch die Anordnung der Schlachttierkörper 12 vertikal auf einer Aufnahme einer Fördereinrichtung 2 ist wiederum eine exakte Lagefixierung der zu bearbeitenden knochenhaltigen Fleischstücke gegenüber den Injektionsvorrichtungen 6 gewährleistet.

In Verbindung mit dem Einsatz mehrerer zeitweise gleichzeitig mit der Fördereinrichtung 2 synchron verfahrbarer Maschinengestelle 3 mit vorzugsweise mehreren Injektionsvorrichtungen 6 kann auch diese Ausführungsform der erfindungsgemäßen Vorrichtung an jede Geschwindigkeit einer kontinuierlich arbeitenden Fördereinrichtung 2 angepasst werden, so daß zwischen der Fördereinrichtung 2 und der Injektionsvorrichtung 6 während der Injektion stets die Relativgeschwindigkeit "0" gewährleistet ist.

Auch diese erfindungsgemäße Vorrichtung ermöglicht durch den erfindungsgemäßen Einsatz von mehreren Flüssigkeitsverteilersystemen 5, daß gleichzeitig sowohl niedrigviskose wie auch hochviskose Flüssigkeiten definiert in das zu bearbeitende knochen-, knorpel- und bindegewebshaltige Fleisch eingebracht werden können.

Auf Grund der vorliegenden erfindungsgemäßen Lösung ist es somit gelungen eine Vorrichtung und ein Verfahren zum Einbringen von Flüssigkeiten in Fleisch zu entwickeln weiches selbst in knochen- und/oder knorpel- bzw. bindegewebshaltiges Fleisch, wie beispielsweise in Schlachttierkörper von Geflügel, aber auch in Keulen oder in Bauchfleisch hocheffektiv bei robustem Aufbau mit hoher Zuverlässigkeit in kürzester Zeit nahezu an jeder, selbst einer bereits vorhandenen Transporteinrichtung, sogar an einem Schlachtband, nadellos ein an die Anatomie des Schlachttierkörpers angepaßtes, sogar gleichzeitiges Einbringen von Wasser, Laken, Stabilisatoren, Würzflüssigksiten und/oder sonstigen Flüssigkeiten in exakt definierten, selbst sehr geringen Mengen bei minimierter Injektionsmengentoleranz ermöglicht.

## Patentansprüche

1. Vorrichtung zum Einbringen von Flüssigkeiten im Fleisch mit einem Grundgestell (1) und am Grundgestell (1) angeordneten ein oder mehreren starr oder linear verschiebbar angeordneten Maschinengestell/en (3) welches/welche mit einer von der erfindungsgemäßen Vorrichtung unabhängigen, bereits vorhandenen Fördereinrichtung (2) zusammenwirken kann/können, wobei am/an den Maschinengestell/en (3) eine mit einer Hochdruckanlage (4) über ein Flüssigkeitsverteilersystem (5) verbundene Injektionsvorrichtung (6) zur nadellosen Injektion angeordnet ist die mit mehreren Düsen versehen ist, **dadurch gekennzeichnet, daß** die Injektionsvorrichtung (6) aus mehreren am Maschinengestell (3) angeordneten, an die Anatomie des Fleischteiles angepassten, bis zu einer Endlagenbegrenzung (9) zuführbaren Düsenstöcken (7) besteht, die das zu injizierende Fleischstück während der Injektion zangenartig umklammern und an denen eine oder mehrere spritzdüsen (8) angeordnet sind.

2. Vorrichtung nach Anspruch 1, **dadurch gekennzeichnet, daß** die Fördervorrichtung (2) ein Transportband oder ein Schlachtband ist.

3. Vorrichtung nach Anspruch 1, **dadurch gekennzeichnet, daß** am/an den Maschinengestell/en (3) mehrere mit mehreren Hochdruckanlagen (4) über mehrere Flüssigkeitsverteilersystem/e (5) verbundene Injektionsvorrichtung/en (6) zur nadellosen injektion angeordnet sind.

4. Vorrichtung zum Einbringen von Flüssigkeiten in knochenhaltiges Fleisch von Schlachttierkörpern nach Anspruch 1, **dadurch gekennzeichnet, daß** an einem Düsenstock (7) gleichartige und/oder unterschiedliche Spritzdüsen (8) angeordnet sind.

5. Vorrichtung nach Anspruch 1, **dadurch gekennzeichnet, daß** mehrere Injektionsvorrichtungen (4) an einem verfahrbaren Maschinengestell (3) miteinander starr verbunden sind.

6. Vorrichtung nach Anspruch 1, **dadurch gekennzeichnet, daß** an einem Grundgestell (1) mehrere verfahrbare Maschinengestelle (3) mit Injektionsvorrichtungen (4) angeordnet sind.

7. Vorrichtung nach Anspruch 1, **dadurch gekennzeichnet, daß** im Bedarfsfall die Injektionsvorrichtung (6) mit einer oder mehreren verfahrbar angeordneten Spritzlanze/en (10) versehen ist/wird, die in den Bauchraum des Tieres einfahren kann/können.

8. Vorrichtung nach Anspruch 1, **dadurch gekennzeichnet, daß** die Fleischstücke vertikal hängend, vertikal aufgesteckt, horizontal aufgesteckt oder in eine Matrize eingelegt in der Fördereinrichtung (2) transportiert werden.

9. Verfahren zum Einbringen von Flüssigkeiten in Fleisch mittels einer Vorrichtung nach Anspruch 1, **dadurch gekennzeichnet, daß** jeder der Düsenstöcke (7) separat mit gleichartigen oder unterschiedlichen Flüssigkeiten, über gleiche oder unterschiedliche, exakt definierte Zeiträume mit gleichem oder unterschiedlichem, exakt definiertem Druck beaufschlagt wird.

10. Verfahren nach Anspruch 9, unter Verwendung einer Vorrichtung nach Anspruch 7, **dadurch gekennzeichnet, daß** auch die Spritztanze/en (6) mit Flüssigkeiten separat, über gleiche oder unterschiedliche, exakt definierte Zeiträume mit gleichem oder unterschiedlichem, exakt definiertem Druck beaufschlagt wird/werden.

11. Verfahren nach Anspruch 9, **dadurch gekennzeichnet, daß** mehrere verfahrbare Maschinengestelle (3) mit Injektionsvorrichtungen (6) zeitlich versetzt zum Einsatz kommen.

12. Verfahren nach Anspruch 9, **dadurch gekennzeichnet, daß** die Fleischstücke vor der nadellosen Injektion gewogen werden.

13. Verfahren nach Anspruch 9, **dadurch gekennzeichnet, daß** sich die Maschinengestelle (3) mit den in der lnjektionsphase befindlichen Injektionsvorrichtungen (6) gegenüber dem Transportband (2) die Relativgeschwindigkeit "0" aufweisen.

14. Verfahren nach Anspruch 9, **dadurch gekennzeichnet, daß** die Viskosität der zu verarbeitenden Flüssigkeit zwischen 1mPas und 10 000 m Pas beträgt.

15. Verfahren nach Anspruch 9, **dadurch gekennzeichnet, daß** die Temperatur der zu verarbeitenden Flüssigkeit zwischen -5° C und 150° C liegt.

## Claims

1. A device for introducing liquids into meat, with a main frame (1) and one, or more machine frames (3) fitted rigidly on to the main frame (1) or which can be moved in a linear manner to work together with an existing transportation device (2) independently from the innovative device, whereby an injection device (6) for needle-free injection, connected with a high pressure system (4) via a liquids distribution system (5) and which is **characterized by** the fact that the injection device (6) consists of one or more nozzle pipes (7) with several mounted spray nozzles (8) fitted on the machine frame (3) with several feed lines (7) which can be moved up to an end position limiter (9) and are adapted to the piece of meat and surround it like a pair of tongs.

2. A device in accordance with claim 1, identified by the fact that the conveying unit (2) is a conveyor belt or a slaughtering conveyor belt.

3. A device in accordance with claim 1, identified by the fact that (one or) several connected injection device(s) (6) for needle-free injection (is) are fitted at/on the machine frame(s) (3) with (one or) several high pressure systems (4) via (one or) several liquid distribution system(s) (5)

4. A device for introducing liquids into meat from slaughtered animals, containing bones, in accordance with claim 1, identified by the fact that the same type of spray nozzles (8) and / or different spray nozzles are fitted at a nozzle pipe (7).

5. A device in accordance claim1, identified by the fact that several injection devices (4) are rigidly connected to each other on a movable machine frame (3).

6. A device in accordance with claim 1, identified by the fact that several movable machine frames (3) are fitted on a main frame (1) with injection devices (4).

7. A device in accordance with claim 1, identified by the fact that the injection device (6) is / will be fitted with one or several fitted spray lance(s) (10) in the case of need, which can move into the belly cavity of the animal.

8. A device in accordance with claim 1, identified by the fact that the pieces of meat can be transported in a vertical hanging position, vertically on hooks, horizontally on hooks or in a matrix fitted into the transportation unit (2).

9. A procedure for introducing liquids into meat by using a device in accordance with claim 1, identified by the fact that each of the nozzle pipes (7) can be filled with the same liquids or different liquids over the same, or different, exactly definable periods of time, with the same, or different, exactly definable pressure, by using a device in accordance with claim 7.

10. A procedure in accordance with claim 9, identified by the fact that the spray lance(s) (6) can also be separately filled with liquids over the same, or different, exactly definable periods of time, with the same, or different, exactly definable pressure.

11. A procedure according to claim 9, identified by the fact that several moveable machine frames (3) with injection devices (6) can be used at different periods of time.

12. A procedure according to claim 9, identified by the fact that the pieces of meat are weighed before the needless injection.

13. A procedure according to claim 9, identified by the fact that the machine frames (3) with the injection devices (6) in the injection phase have a speed of "0" compared to the conveyor belt (2).

14. A procedure according to claim 9, identified by the fact that the viscosity of the liquid to be used is between 1 mPas and 10 000 m Pas.

15. A procedure according to claim 9, identified by the fact that the temperature of the liquid to be used is between -5°C and 150° C.

## Revendications

1. Dispositif pour disposer des liquides dans la viande avec une ou plusieurs armature(s) (3) de machine disposés de manière rigide ou linéaireavec une armature de base (1) et à une armature de base (1) disposés, le(s)quel(s) peut/peuvent agir en commun avec un dispositif indépendant conforme à la découverte, un dispositif de transport (2) déjà disponible, bien qu'un dispositif d'injection (6) pour injection sans aiguille, relié à une installation à haute pression(4) est disposé au/sur l'(les)armature(s) de machine (3) doté(s) de plusieurs buses, **caractérisé en ce**la par le fait que le dispositif d'injection (6) se compose de plusieurs tiges de buses (7) à avancer jusqu'à une limite à une position finale adaptée à l'anatomie de la pièce de viande disposée à l'armature de machine, qui entoure le morceau de viande à injecter de manière similaire à des dents pendant l'injection et sur lequel se trouve une ou plusieurs buses d'injection.

2. Dispositif selon la revendication 1 **caractérisée en ce**la par le fait que le dispositif de transport (2) est une bande de transport ou d'une bande d'abattage.

3. Dispositif selon la revendication 1 **caractérisée en ce**la par le fait que sur/au(x) armature(s) de machine (3) un/des dispositifs d'injections (6) pour l'injection sans aiguilles sont raccordés avec plusieurs installations haute pression (4) par plusieurs systèmes de répartition de liquide (5).

4. Dispositif pour amenée de liquides dans la viande contenant des os provenant de corps d'animaux abattus selon la revendication 1 **caractérisée en ce**la par le fait que des buses d'injection (8) du même type et/ou différentes sont disposées sur un porte injecteurs (7).

5. Dispositif selon la revendication 1, **caractérisée en ce**la par le fait que plusieurs dispositifs d'injection (4) sont raccordés de manière rigide à une armature déplaçable de machine (3).

6. Dispositif selon la revendication 1, **caractérisée en ce**la par le fait que plusieurs armatures déplaçables de machine (3) avec les dispositifs d'injection (4) sont disposées sur une armature de base (1).

7. Dispositif selon la revendication 1 **caractérisée en ce**la par le fait que dans le cas de besoin, le dispositif d'injection (6) est/sera doté avec une ou plusieurs lance(s) d'injection (10) qui peut/peuvent pénétrer dans l'espace ventral de l'animal.

8. Dispositif selon la revendication 1 **caractérisée en ce**la par le fait que les morceaux de viande suspendus à la verticale, fixés à la verticale, fixés à l'horizontale ou disposés dans une matrice, sont transportés dans un dispositif de transport (2).

9. Procédé pour introduire des liquides dans la viande au moyen d'un dispositif selon la revendication 1, **caractérisé en ce**la par le fait que chacun des portes injecteurs (7) est alimenté de manière séparée avec les liquides identiques et différents, pendant des durées définies identiques ou différents à une pression définie de manière exacte, identique ou différente.

10. Procédé selon la revendication 9, en considération de l'emploi d'un dispositif selon la revendication 7, **caractérisé** aussi en cela par le fait que la/les lances d'injection (6) avec le(s) liquide(s) séparés sont /seront alimentées, pendant des durées définies identiques ou différents d'une pression définie de manière exacte, identique ou différente.

11. Procédé selon la revendication 9, **caractérisé** aussi en cela par le fait que plusieurs armatures déplaçables de machines (3) sont employés de manière décalée dans le temps avec des dispositifs d'injection (6).

12. Procédé selon la revendication 9, **caractérisé** aussi en cela par le fait que les morceaux de viande sont pesés avant l'injection sans aiguilles.

13. Procédé selon la revendication 9, **caractérisé** aussi en cela par le fait que les armatures de machine (3) présentent la vitesse relative «0» avec les dispositifs d'injection (6) se trouvant dans la phase d'injection par rapport à la bande de transport (2).

14. Procédé selon la revendication 9, **caractérisé** aussi en cela par le fait que la viscosité du liquide à traiter se monte entre 1 mPas et 10 000 m Pas.

15. Procédé selon la revendication 9, **caractérisé** aussi en cela par le fait que la température du liquide à traiter se situe entre -5°C et 150°C.
